Europäisches Patentamt

(19) **European Patent Office**

Office européen des brevets

(11) Veröffentlichungsnummer: **0 026 301**
**B1**

(12) **EUROPÄISCHE PATENTSCHRIFT**

(45) Veröffentlichungstag der Patentschrift:
**11.07.84**

(51) Int. Cl.³: **B 09 B 1/00, E 21 F 15/00,
B 65 G 53/30, B 65 F 5/00**

(21) Anmeldenummer: **80104702.8**

(22) Anmeldetag: **12.09.80**

(54) **Verfahren zum Beseitigen oder Zwischenlagern von Abfällen.**

(30) Priorität: **27.09.79 DE 2939051**

(43) Veröffentlichungstag der Anmeldung:
**08.04.81 Patentblatt 81/14**

(45) Bekanntmachung des Hinweises auf die Patenterteilung:
**11.07.84 Patentblatt 84/28**

(84) Benannte Vertragsstaaten:
**AT BE DE FR GB IT NL SE**

(56) Entgegenhaltungen:
**AU - B - 491 601**
**DE - C - 554 228**
**FR - A - 819 735**
**FR - A - 1 461 616**
**FR - A - 2 003 144**
**GB - A - 1 523 868**
**US - A - 3 606 036**
**US - A - 4 019 327**
**US - A - 4 101 333**

**MINING MAGAZINE, Band 130, Nr. 4, April 1974, Seiten 244-253 London, G.B. "Mine filling installations at Mount Isa"**
**ERZMETALL, Band 33, Nr. 1, Januar 1980, Seiten 13-18 Stuttgart, DE. K. JANSSEN: "Pumpversatz-freundliche Gesichter eines neuen bergmännischen Verfahrens"**

(73) Patentinhaber: **PREUSSAG Aktiengesellschaft Metall, Rammelsberger Strasse 2, D-3380 Goslar 1 (DE)**

(72) Erfinder: **Janssen, Klaus, Dipl.-Ing., Kaisertorstrasse 3, D-3380 Goslar 1 (DE)**
Erfinder: **Meier, Jürgen, Dipl.-Ing., Hübichweg 25, D-3362 Bad Grund (DE)**
Erfinder: **Frank, Siegfried Dipl.-Ing., Hilfe Gottes 7, D-3362 Bad Grund (DE)**

(74) Vertreter: **König, Reimar, Dr.-Ing. et al, Patentanwälte Dr.-Ing. Reimar König Dipl.-Ing. Klaus Bergen Wilhelm-Tell-Strasse 14 Postfach 260162, D-4000 Düsseldorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf ein Verfahren zum Beseitigen oder Zwischenlagern feinteiliger und/oder flüssiger Abfälle, bei dem ein Feststoff/Transportflüssigkeits-Gemisch mittels einer Verdrängungspumpe durch Rohrleitungen in natürliche oder künstliche über- oder untertägige Deponien und Räume gefördert und dort deponiert wird. Ein derartiges Verfahren ist aus der US-Patentschrift 4 019 327 bekannt.

Die Abfallbeseitigung ist heutzutage ebenso wie das aus landschaftskulturellen oder bergtechnischen Gründen erforderliche Verfüllen über- oder untertägiger Deponien und Hohlräume insbesondere unter Kosten- und Sicherheitsgesichtspunkten ein Problem von zunehmender Bedeutung. Dies gilt insbesondere für die Beseitigung umweltgefährdender Stoffe, die dem Biozyklus entzogen und daher zumeist in untertägigen geologischen Formationen wartungsfrei und insbesondere über Jahrhunderte sicher deponiert werden müssen.

Anderseits ist es im Untertagebergbau normalerweise unerlässlich, die durch die Gewinnung des Minerals entstandenen Hohlräume mit taubem Gestein oder anderen Versatzstoffen zu verfüllen. Darüber hinaus ist es bei verschiedenen Abbauverfahren nur bei der Verwendung von Versatz möglich, den Grad der Verdünnung des Förderguts durch beim Abbau hereinbrechendes Nebengestein zu verringern und damit der Aufbereitung ein höherwertiges Ausgangsmaterial zur Verfügung zu stellen. Dabei lassen sich die Aufbereitungsabgänge des Förderguts als Versatz verwenden. Die zur Verfügung stehenden Abgänge sind jedoch nur zum Teil, nämlich soweit sie als grobkörnige Schwimmberge anfallen, als Versatz geeignet, so dass sich nur ein entsprechend geringer Teil der Förderung unter Einsatz dieser Art von Versatz abbauen lässt.

Die hierbei anwendbaren Versatzverfahren sind der Spül- und der Blasversatz. Beide Verfahren sind heute zwar weitgehend mechanisiert, besitzen jedoch den wirtschaftlichen Nachteil eines mehrfach unterbrochenen Förderweges vom Punkt des Schwimmberge-Anfalls in der Erzaufbereitung über Tage bis zum Verwendungsort im Abbau. Ausserdem wird beim Spül-Versatzverfahren das Versatzgut im wesentlichen nur unter Ausnutzung der Schwerkraft gefördert, die zumeist jedoch nicht ausreicht, so dass eine teilweise Druckwasser- und/oder Druckluftförderung hinzukommen muss. Der Blasversatz ist hingegen sehr energieaufwendig und führt zu einer hohen Staubbelastung sowie starkem Transportmittelverschleiss. Das Sturzversatzverfahren anderseits erfordert einen verhältnismässig hohen Abbauraum, der bei gebrächem Nebengestein Ursache einer beträchtlichen Erzverdünnung ist.

Laugungs- und Flotationsabgänge erwiesen sich bisher wegen ihrer Feinkörnigkeit untauglich als Versatzmaterial da sie – bei Einsatz des für feine Sande geeigneten Spülversatzverfahrens – mit einem hohen Anteil Transportwasser in die Grube gebracht vor Ort nicht entwässern. Daher werden derartige Abgänge in Schlammteichen deponiert, ein zwar weltweit übliches, jedoch wenig umweltfreundliches und aufwendiges Verfahren.

Bei dem bekannten Spülversatzverfahren wird das Versatzgut mit Hilfe von Wasser durch Rohrleitungen in den zu verfüllenden Abbauraum gefördert. Dabei kommen vor allem feinteilige Versatzstoffe wie Sand, waschbare Kesselasche und granulierte Hochofenschlacke mit möglichst geringem Feinkornanteil zur Verwendung. Das Verhältnis von Versatzstoff zu Förderwasser liegt je nach der Beschaffenheit des Versatzgutes normalerweise bei 1:1 bis 1:5. Die damit in den zu verfüllenden Abbauraum gelangenden erheblichen Wassermengen bringen eine Reihe von Problemen mit sich. Zum einen ergibt sich nur bei einer ausreichenden Entwässerung des Versatzguts ein ausreichend tragfähiger Versatz. Zum anderen muss aber auch das Spülwasser aus dem Abbauraum abgefördert und, beispielsweise in Absetzbecken, geklärt werden. Das bringt erhebliche Kosten mit sich. Ein Verbringen flüssiger oder fester umweltgefährdender Abfallstoffe nach dem Spülversatzverfahren ist überhaupt nicht möglich, weil entweder die Spülflüssigkeit von vornherein kontaminiert ist oder durch einen umweltgefährdenden Feststoff kontaminiert wird. Ein weiterer Nachteil des Spülversatzverfahrens besteht darin, dass die Rohrleitungen im Verhältnis zu der Menge an gefördertem Versatzgut bzw. Feststoff einem hohen Verschleiss unterliegen.

Schliesslich kommt für flüssige Schadstoffe häufig nur eine äusserst aufwendige Behälterlagerung in Frage.

Der Erfindung liegt daher die Aufgabe zugrunde, ein Verfahren zu schaffen, mit dem sich feinstkörnige, beispielsweise staubförmige, oder auch pastöse und schlammförmige Abfallstoffe deponieren lassen, ohne dass bezüglich der Transportflüssigkeit Probleme auftreten und/oder – im Falle einer untertägigen Lagerung – ein nicht hinreichend geologisch stabiler Versatz in einem natürlichen oder künstlichen Hohlraum entsteht. Die Lösung dieser Aufgabe besteht darin, dass bei einem Verfahren der eingangs erwähnten Art erfindungsgemäss ein unter 20 Gew.-% Transportflüssigkeit, vorzugsweise Wasser enthaltendes Gemisch, mittels einer Kolbenpumpe in den Hohlraum gefördert wird.

Die geringe Flüssigkeitsmenge, die vorzugsweise 12 bis 15 Gew.-% beträgt, aber auch unter 10 Gew.-% liegen kann, ergibt ein hochkonsistentes Fördergut und damit eine Art Dickstrom-Schubförderung in Form einer quasilaminaren Strömung mit gleicher Geschwindigkeit über den Rohrquerschnitt. Die im Vergleich zu der Dünnstromförderung beim Spülversatzverfahren geringe Strömungsgeschwindigkeit, bezogen auf die Feststoff-Volumeneinheit, erfordert weniger Energie und ergibt angesichts der geringeren spezifischen Reibung einen wesentlich geringeren Rohrverschleiss. Hinzu kommt, dass die verhältnismässig geringe Menge Transportwasser ein Entwässern vor Ort bzw. in den zu verfüllenden Abbauraum überflüssig macht, ohne dass die Gefahr einer Grundwasserverunreinigung besteht. Das ist von besonderem Vorteil, wenn an die Stelle von Wasser eine umweltgefährdende Flüssigkeit tritt.

Anderseits erlaubt die geringe Flüssigkeitsmenge aber auch ein Abbinden der Transportflüssigkeit vor Ort, beispielsweise ein hydraulisches Abbinden des Wassers mit Zement, ohne dass die Kosten für das hydraulische Bindemittel das Mass des Vertretbaren übersteigen.

Das erfindungsgemässe Verfahren eignet sich daher hervorragend für eine Abfallbeseitigung oder eine Zwischenlagerung im Falle einer späteren Weiterverarbeitung insbesondere von Abfallstoffen aus chemischen und/oder physikalischen Trennverfahren, beispielsweise der Laugung, Fällung und Flotation, aus der Wasserreinigung und Kläranlagen sowie von Aschen, Filterschlämmen und feinem Siebgut. Der besondere Vorteil bei der Beseitigung umweltgefährdender Abfallstoffe liegt neben der geringen Transportflüssigkeitsmenge in dem Rohrleitungstransport, der ein geschlossenes System zwischen Aufgabeort und Verbringungsort ermöglicht und damit jede Art von Emmission ausschliesst.

Das erfindungsgemässe Verfahren erlaubt eine geordnete Ablagerung ohne schädliche hydrogeologische Folgen sowohl fester als auch pastöser oder flüssiger Abfallstoffe. Pastöse oder feste Abfallstoffe brauchen lediglich auf den für die erfindungsgemässe Dickstrom-Schubförderung erforderlichen Flüssigkeits- bzw. Wassergehalt eingestellt zu werden. Das kann mit Hilfe einer anderen – auch giftigen – Abfallflüssigkeit geschehen. Anderseits lassen sich auch flüssige Abfallstoffe mit Hilfe eines Feststoffs, beispielsweise eines anderen Abfallstoffs, in ein Gemisch für eine stichfeste Lagerung überführen.

Das kommt dem allgemeinen Bestreben entgegen, gefährliche Abfallstoffe möglichst nicht zu verdünnen, sondern Schadstoffe in möglichst konzentrierter Form und daher verhältnismässig kleinen Mengen zu deponieren.

Für das erfindungsgemässe Verfahren gilt der Grundsatz, dass die für die Pumpförderung erforderliche Mindestmenge an Transportflüssigkeit um so geringer ist, je höher der Grobgutanteil im Gemisch ist. Das findet seinen Grund in der mit zunehmendem Teilchendurchmesser geringer werdenden spezifischen Oberfläche. Gleichzeitig erhöht ein zunehmender Grobgutanteil auch die Zähigkeit des Fördergemischs und wirkt auf diese Weise einem Entmischen in Förderrichtung entgegen. Vorzugsweise beträgt jedoch der Durchmesser des grössten Einzelkorns höchstens 15 bis 25 Gew.-% des Durchmessers der Förderleitung. Hinzu kommt, dass der Grobgutbedarf bei kleinerem Rohrdurchmesser geringer ist. Beim Verbringen feinkörniger Abfallstoffe empfehlen sich daher kleine Rohrdurchmesser.

Vorzugsweise genügt das Fördergemisch der Bedingung:

$$\frac{\dot{V}_F + \dot{V}_{F1}}{\dot{M}_G} > \frac{1}{\gamma'_G} - \frac{1}{\gamma_G},$$

wobei

$\dot{V}_F$      Volumenstrom des Feingutes (m³/h),

$\dot{V}_{Fl}$      Volumenstrom ε Wassergehalt der Mischung (m³/h),

$\dot{M}_G$      Massenstrom des Grobgutes (t/h),

$\gamma'_G$      Schüttdichte des Grobgutes (t/m³),

$\gamma_G$      Dichte des Grobgutes t/m³)

bedeuten.

Vereinfachend lässt sich eine pumpbare Mischung durch

$$\dot{M}_F + \dot{M}_{H_2O} > \dot{M}_G$$

bzw. im Sinne der Forderung, dass dieses Verfahren mit dem geringstmöglichen Wassergehalt des Fördergemischs arbeiten soll, durch

$$\dot{M}_F > \dot{M}_G$$

charakterisieren, wobei

$\dot{M}_F$      Massenstrom des Feingutes (t/h)

$\dot{M}_{H_2O}$      Massenstrom ε Wassergehalt der Mischung (t/h)

bedeuten.

Das erfindungsgemässe Verfahren lässt sich mit besonderem Vorteil bei der Verwendung von Schwimmbergen und Flotationsbergen als untertägiger Versatz anwenden. Dabei ergibt sich ein Verfahren zum Verfüllen untertägiger Abbauräume, dessen Ausgangsmaterialien in ausreichender Menge zur Verfügung stehen, um den gesamten Abbau beispielsweise in einem Erzbergwerk mit Hilfe von Versatz durchführen zu können. Im Gegensatz zum Teilsohlenbruchbau und des Teilsohlenbaus mit Versatz wird beim Stossbau mit Pumpversatz nur ein verhältnismässig kleiner, für die Erzgewinnung erforderlicher Abbauhohlraum geöffnet, so dass ein Hereinbrechen von gebrächem Nebengestein bei der Gewinnungsarbeit ausgeschlossen ist und es auch nicht zu einer Erzverdünnung kommt.

Es empfiehlt sich, die Schwimmberge sowie die Flotationsberge im Verhältnis ihres Anfalls miteinander zu mischen. Insbesondere können die Schwimmberge und die Flotationsberge etwa zu gleichen Teilen miteinander gemischt werden.

Die Aufbereitungsabgänge des Bergwerks, sogenannte Schwimmberge, ein Kies mit 3 bis 30 mm Korndurchmesser, und Flotationsberge, ein äusserst feinkörniges Material mit einem Korndurchmesser unter 0,5 mm, werden miteinander vermischt und bilden bei einem Wassergehalt von etwa 12 bis 15 Gew.-% ein pumpbares Gut. Das Gemisch wird vorzugsweise mittels Zwillingskolbenpumpen bis in den Abbau hineingepumpt. Unter Einsatz von Zwischenpumpstationen lassen sich Entfernungen von mehreren Kilometern überwinden. Vor Ort kann das im Versatzgut enthaltene Wasser durch Zement abgebunden werden, der dem Gemisch vorzugsweise vor Ort zugesetzt wird. Der beim Abbinden entstehende Magerbeton besitzt hervorragende Stützeigenschaften, wie sie von einem verfestigten Versatz gefordert werden.

Es empfiehlt sich, der Mischung aus Schwimmbergen und Flotationsbergen nur so viel Wasser beizumischen, dass der Zementbedarf zur Wasserbindung vor Ort nicht höher ist, als bei einem Magerbeton-Versatz notwendig ist. Ein höherer Anteil an Wasser würde nur das Transportsystem belasten und beim Einbringen des Versatzes im Abbau Schwierigkeiten verursachen.

Ein bevorzugtes Verfahren besteht darin, dass die Flotationsberge in der Aufbereitung zunächst bei einem Korndurchmesser von 0,06 mm getrennt werden, anschliessend der über dem Korndurchmesser von 0,06 mm liegende Anteil der Flotationsberge mittels eines Zyklons und eines Entwässerungssiebes sowie der unter einem Korndurchmesser von 0,06 mm liegende Anteil der Flotationsberge mittels eines Eindickers und einer Zentrifuge entwässert werden. Die entwässerten Flotationsberge werden dann mit den Schwimmbergen auf einen bestimmten Wassergehalt eingestellt und gemischt, wonach das Gemisch in die Grube gepumpt und ihm vor Ort Zementleim zugesetzt wird. Hierbei wird das Versatzgemisch mit Drücken im Bereich von 100 bar gepumpt.

Die Stützfähigkeit des Versatzes von beispielsweise 20 bar bei 3 Gew.-% Zement, der einem Magerbeton entspricht, tut ein übriges, so dass die durch Einführung des Pumpversatzes ermöglichte Abbau-Versatz-Verfahrenskombination optimale Voraussetzungen schafft, auch besonders schwierige Gebirgsverhältnisse zu beherrschen. Des weiteren wird die Steinfallgefahr vermindert, was insbesondere eine bessere Arbeitssicherheit bedeutet. Auch die Abbaukosten lassen sich infolge des reduzierten Ausbauaufwandes erheblich senken.

Die Möglichkeit, den Versatz durchgehend vom Ort des Versatzgutanfalles in der Aufbereitung über Tage bis vor Ort in einem Zuge zu transportieren stellt fördertechnisch ein Optimum dar. Ein weiterer Vorteil der Verwendung der Flotationsberge für den Versatz besteht darin, dass die Flotationsberge nicht mehr über Tage verhaldet werden müssen.

Gegenüber den herkömmlichen Verfahren, die das Versatzgut nur in beträchtlicher Verdünnung mit Hilfe eines Fördermediums – beim Blasversatz Druckluft, beim Spülversatz Wasser – fördern, läuft der Rohrleitungstransport des erfindungsgemässen hochkonsistenten Pumpversatzes in Form einer hydraulischen Dickstromförderung praktisch fördermedienfrei ab, wenn man von dem geringen Wasserzusatz absieht, der ohnehin zum Abbinden des Zements vor Ort erforderlich ist.

Der Wegfall eines vor Ort wieder abzuscheidenden Fördermediums bedeutet für den Pumpversatz einen beträchtlichen Vorteil. So werden die Staubbelastung vor Ort, wie sie mit dem Blasversatz verbunden ist, oder auch die bei Anwendung des Spülversatzes auftretenden Schlamm- und Wasserprobleme vermieden. Die aus dem Wegfall eines Fördermediums resultierende, wesentlich geringere Fördergeschwindigkeit des Pumpversatzgemischs führt zu einem erheblich geringeren Rohrleitungsverschleiss im Vergleich zu den vorerwähnten bekannten Verfahren.

Der Grad der Pumpbarkeit des Gemischs hängt vom Vorhandensein von mittlerem und/oder feinem Korn in einem Volumenanteil ab, der denjenigen des theoretischen Porenvolumens des geschütteten Grobkorns übertrifft. Ein kontinuierliches Gleiten des Gutes in der Pumpleitung ist nämlich nur dann gegeben, wenn sich nicht aus gröberen Körnern Brücken über dem Rohrquerschnitt bilden können. Hierzu ist ein bestimmter Anteil von feinerem Gut erforderlich, der die gröberen Körner in der Mischung voneinander getrennt hält. Ein derartiges Kornspektrum und die hohe Konsistenz der Mischung verhindern weitgehend Relativbewegungen der Einzelkörner, so dass diese während der Pumpförderung in ihrer relativen Lage fixiert werden und eine Entmischungsgefahr nicht besteht. Eine besondere Rolle bezüglich der Pumpbarkeit und des Fördermittelverschleisses spielt das Feinstkorn, dem die zusätzliche Aufgabe zufällt, zwischen dem hochkonsistenten Fördergut und der Rohrleitungswandung einen Gleitfilm herzustellen. Dieser Gleitfilm entsteht im Wege einer Druckentmischung infolge des Wasseranteils im Gemisch.

Die Erfindung wird nachfolgend anhand eines in der Zeichnung dargestellten Ausführungsbeispiels des näheren erläutert. In der Zeichnung zeigen:

Fig. 1 einen Seigerriss,

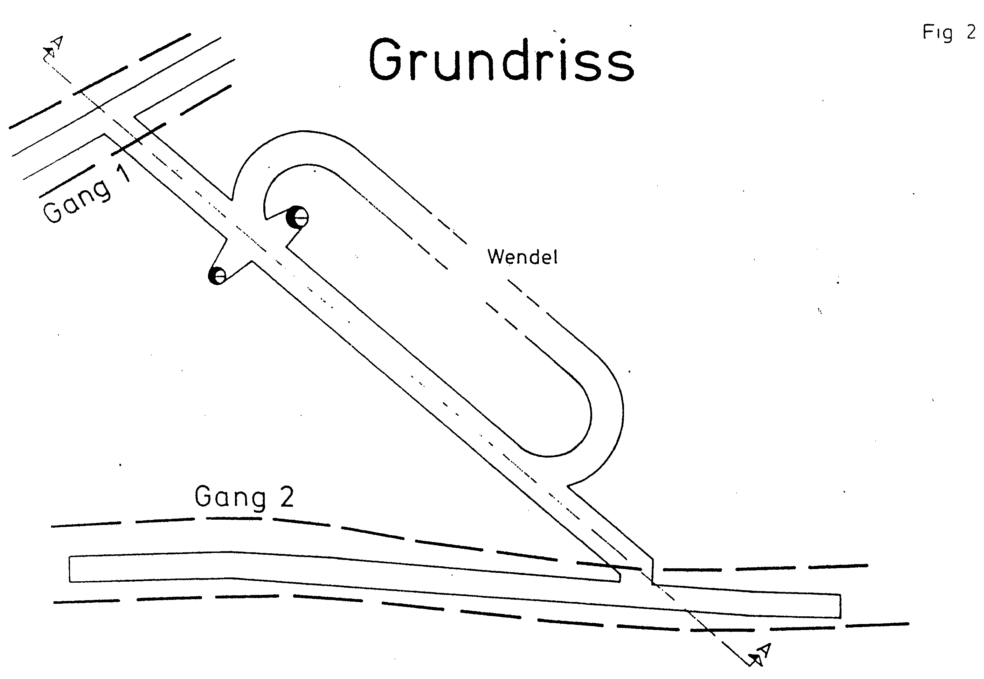

Fig. 2 einen Grundriss,

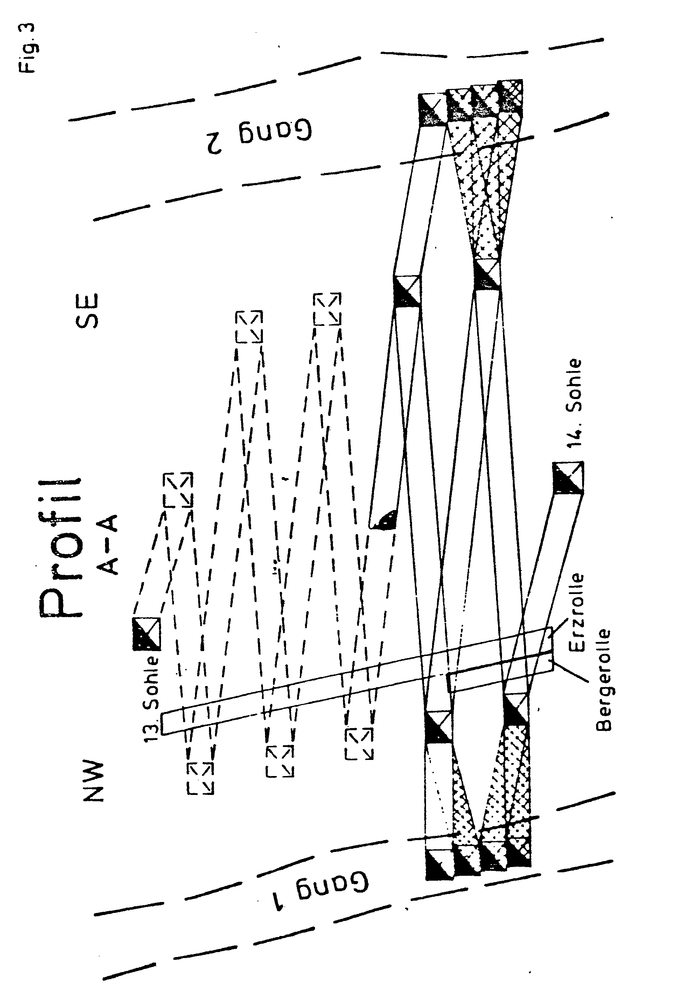

Fig. 3 das Profil längs der Linie A–A der Fig. 2,
Fig. 4 eine vergrösserte Darstellung eines Bereiches der Fig. 1,
Fig. 5 den Wasseranteil und Sättigungsgrad des Porenvolumens in Abhängigkeit vom Verhältnis Kies : Schluff in Gewichtsanteilen und
Fig. 6 die in Fig. 5 dargestellten Verhältnisse, hier allerdings in Volumenanteilen.

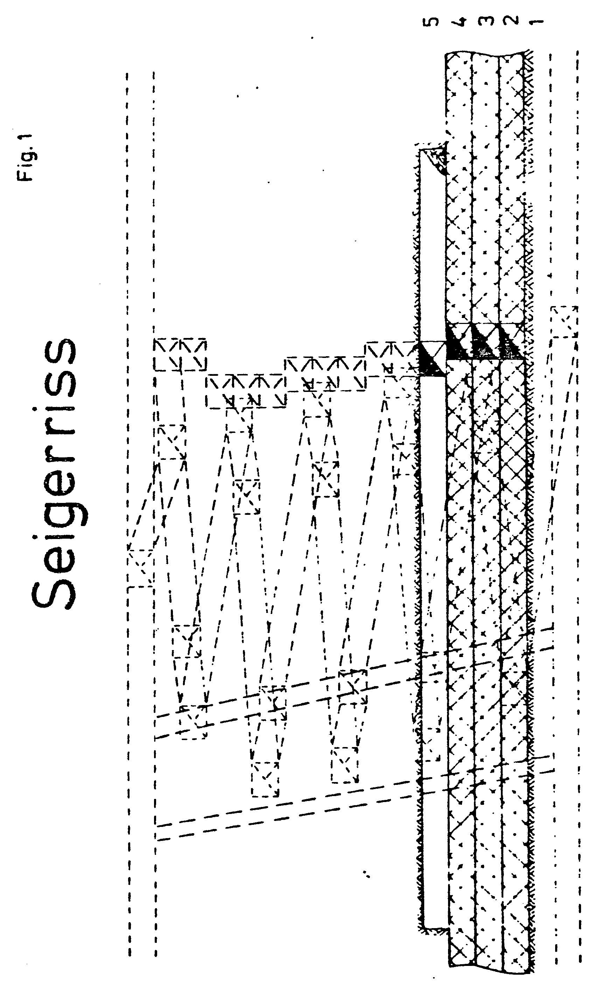

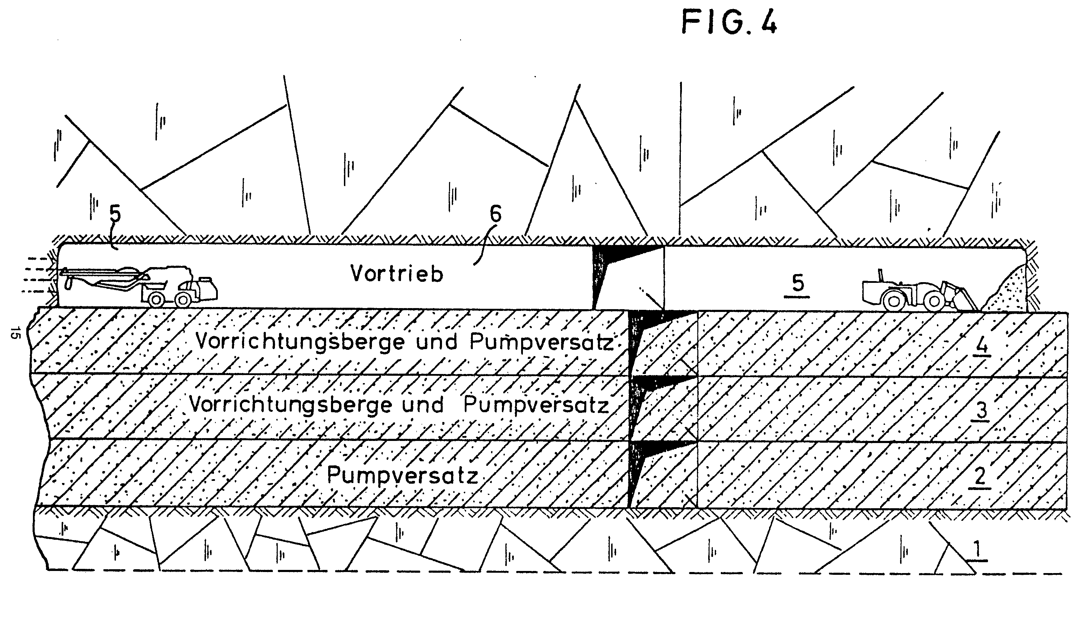

Aus den Fig. 1 und 4 ist ersichtlich, dass auf dem die Solenschwebe bildenden Stoss 1 die Stösse 2, 3 und 4 abgebaut und mit Versatz verfüllt sind. Im Stoss 5 wird noch Erz gewonnen. Nach Beendigung dieser Erzgewinnung wird auch Stoss 5 mit Versatz verfüllt. Die Hohlräume 6 werden vergleichsweise klein gehalten, insbesondere stehen nicht zwei übereinander befindliche Teilsohlen im Abbau-Bereich miteinander in Verbindung und bilden dadurch einen grossen Hohlraum, dessen ausbaumässige Beherrschung Schwierigkeiten bereitet.

Nachfolgende Tabelle I zeigt eine Siebanalyse der Schwimmberge eines Erzbergwerkes, während Tabelle II eine Siebanlage der Flotationsberge desselben Bergwerkes wiedergibt. Aus den Tabellen geht hervor, dass die Flotationsberge eine Korngrösse von 0,5 mm und kleiner aufweisen, während die Schwimmberge eine Korngrösse von 3 mm und mehr haben.

Tabelle I

| Kornspanne mm | Gew.-% | Gew.-% |
|---|---|---|
| +30 | 1,8 | 1,8 |
| 20 | 20,4 | 22,2 |
| 15 | 24,2 | 46,4 |
| 10 | 24,6 | 71,0 |
| 5 | 21,8 | 92,8 |
| 3 | 3,5 | 96,3 |
| − 3 | 3,7 | 100,0 |

Tabelle II

| Kornspanne mm | Gew.-% | Gew.-% |
|---|---|---|
| +0,5 | 1,5 | 1,5 |
| 0,315 | 6,5 | 8,0 |
| 0,2 | 10,8 | 18,8 |
| 0,16 | 13,7 | 32,5 |
| 0,1 | 7,2 | 39,7 |
| 0,08 | 11,8 | 51,5 |
| 0,063 | 4,9 | 56,4 |
| 0,04 | 7,0 | 63,4 |
| − 0,04 | 36,6 | 100,0 |

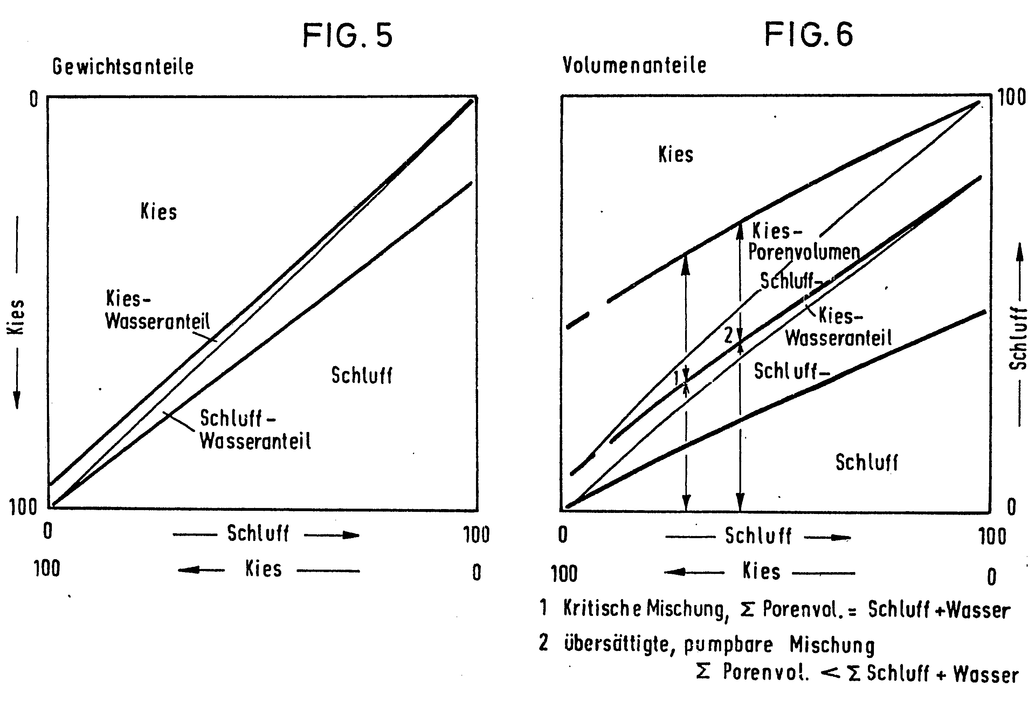

Aus den Fig. 5 und 6 geht der Wasserhaushalt des Versatzgemisches in Abhängigkeit vom Mischungsverhältnis gröberen Materials mit Flotationsbergen hervor. Die hohe Kornfeinheit schliesst ein Entwässern des Versatzes vor Ort aus, was den Zusatz eines hydraulischen Bindemittels erforderlich macht. Aus diesem Grund ist der Wassergehalt der Mischung ein weiteres. Kriterium für die Wirtschaftlichkeit des Verfahrens. Zwar liesse sich durch Überdosierung des Flotationsberganteils im Gemisch die Pumpbarkeit ohne weiteres sicherstellen. Anderseits beträgt der Wassergehalt dieser Gemischkomponente nach dem Entwässern ein Mehrfaches gegenüber dem gröberen Kies (Schwimmberge etwa 5 Gew.-%, Flotationsberge etwa 25 Gew.-% Wassergehalt), so dass ein unnötig hoher Zementbedarf für das Abbinden des Wassers entstünde.

Versuche haben bestätigt, dass folgender Grundsatz für die Rezeptur eines hochkonsistenten pumpbaren Gemischs eines kies- und eines feinsandigen bis schlufförmigen Gutes bei geringstmöglichem Wassergehalt gilt: Die Summe der Porenvolumina der Mischungskomponenten — angenähert errechenbar aus den Quotienten ihrer Schüttgewichte und ihrer spezifischen Dichte — sollte übertroffen werden durch die Summe des Schlüpfkornanteils und des Wassergehalts (vgl. Fig. 5 und 6). Unter Schlüpfkorn ist der Feinkornanteil zu verstehen, der das Porenvolumen der Kieskörnung zu füllen vermag. Für diese formelhafte Rezeptur gelten folgende Eckwerte;

Reiner Kies als zu verpumpender Feststoff erfordert einen höheren Wasseranteil der Mischung, als es seinem Porenvolumen (Schwimmberge min. 40%) entsprechen würde, und zwar ist wegen der Gefahr eines Entmischens mit der Folge einer Leitungsverstopfung eine erhebliche Überdosierung erforderlich, so dass sich eine Dünnstromförderung ergibt.

Reine Flotationsberge fallen aus der Betrachtung heraus, da bei den aus Gründen der Durchsatzmengen zu verwendenden Leitungsdurchmesser das allgemein anerkannte kritische vier- bis sechsfache des Maximalkorndurchmessers so sehr übertroffen wird, dass die Gefahr eines Verstopfens schon bei geringeren Wassergehalten nicht mehr besteht.

In einem Gemisch aus Kies und Schluff wirkt der Schluffanteil als Schlüpfkorn, bezogen auf die Porenabmessungen der Kiesschüttung, so dass sich theoretisch der geringste Wasserbedarf des Gemischs ergibt, wenn der Schluffanteil gerade dem Porenvolumen des Kieskorns entspricht und allein das Porenvolumen des Schluffanteils mit Wasser zu füllen ist.

Der erfindungsgemäss aus Schwimmbergen und Flotationsbergen bestehende Versatz wird vorteilhafterweise in der Aufbereitung angesetzt und von einer übertägigen Pumpstation aus in die Grube gepumpt. Das hat zum einen den Vorteil eines ungebrochenen Förderweges, zum anderen wirkt es sich erheblich energiesparend aus, wenn der Druckgewinn der Schachtleitung ausgenutzt wird, um horizontale Förderwege unter Tage zu überwinden.

Die Vorzüge des erfindungsgemässen Pumpversatzverfahrens sowohl im Vergleich zu den bekannten konkurrierenden Verfahren — insbesondere dem Spülversatz — gelten selbstverständlich für alle Bergbaubetriebe. Anlass zum Einsatz können sowohl bergtechnische Gründe wie die Beherrschung von hohen Gebirgsdrücken etwa in Südafrika, das Fehlen von für Spülversatz geeignetem Material, Schwierigkeiten mit der Beseitigung oder der Wirkung des Spülversatzwassers auf das Gebirge oder auch umweltbedingte Gründe wie Raummangel oder andere Hindernisse bei der Flotationsberge-Deponie sein.

Abfall in hochkonsistenter Form zu verpumpen, so dass am Ort der Deponie oder Weiterverarbeitung die Transportwasserbeseitigung weitgehend entfällt, ist zweifellos von Vorteil. Heterogene Abfälle wie kommunaler Abwasserschlamm und zerkleinerter Müll oder Feinasche mit stückiger Schlacke — jeweils entsprechend ihrem Porenvolumen in optimalem Verhältnis gemischt — zu verpumpen, bietet ein weiteres Anwendungsfeld.

Das erfindungsgemässe Verfahren eröffnet auch die Möglichkeit, schädliche oder gefährliche Abfallstoffe berührungsfrei in einer pumpbaren Einbettungsmasse abzufördern. Dabei ist sowohl eine dosierte freie Beimischung des Schadstoffes zur Einbettungsmasse als auch sein portionsweises Einfügen in den verpumpten Gutstrom möglich. Auch kann ein derartiges Verpumpen entweder nur dem berührungsfreien Transport dienen oder aber in betonartiger Einbettungsmasse eine dauerhaft gesicherte Deponierung ermöglichen.

**Patentansprüche**

1. Verfahren zum Beseitigen oder Zwischenlagern feinteiliger und/oder flüssiger Abfallstoffe, bei dem ein Feststoff/Flüssigkeits-Gemisch mittels einer Verdrängungspumpe durch Rohrleitungen in natürliche oder künstliche über- oder untertägige Räume gefördert und dort deponiert wird, dadurch gekennzeichnet, dass ein unter 20 Gew.-% Transportflüssigkeit, vorzugsweise Wasser, enthaltendes Gemisch mittels einer Kolbenpumpe in den Hohlraum gefördert wird.

2. Verfahren nach Anspruch 1, dadurch gekennzeichnet, dass das Gemisch 12 bis 15 Gew.-% Transportflüssigkeit enthält.

3. Verfahren nach Anspruch 1 oder 2, dadurch gekennzeichnet, dass ein Fördergemisch aus Feingut und Grobgut der Bedingung

$$\frac{\dot{V}_F + \dot{V}_{F1}}{\dot{M}_G} > \frac{1}{\gamma'_G} - \frac{1}{\gamma_G},$$

genügt, wobei

$\dot{V}_F$     Volumenstrom des Feingutes (m³/h),
$\dot{V}_{F1}$     Volumenstrom $\varepsilon$ Flüssigkeitsgehalt der Mischung (m³/h),
$\dot{M}_G$     Massenstrom des Grobgutes (t/h),
$\gamma_G$     Schüttdichte des Grobgutes (t/m³),
$\gamma_G$     Dichte des Grobgutes (t/m³)
bedeuten.

4. Verfahren nach einem oder mehreren der Ansprüche 1 bis 3, dadurch gekennzeichnet, dass die Summe des Schlupfkornanteils und des Wassergehalts grösser ist als die Summe der Porenvolumina der Gemischkomponenten.

5. Verfahren nach einem oder mehreren der Ansprüche 1 bis 4, dadurch gekennzeichnet, dass in dem Fördergemisch das mittlere und/oder das feine Korn mit einem Volumenanteil vorliegt, der grösser als der Volumenanteil des theoretischen Porenvolumens des geschütteten Grobkorns ist.

6. Verfahren nach einem oder mehreren der Ansprüche 1 bis 5, dadurch gekennzeichnet, dass der Durchmesser des grössten Einzelkorns höchstens 15 bis 25% des Rohrdurchmessers entspricht.

7. Verfahren nach einem oder mehreren der Ansprüche 1 bis 6, dadurch gekennzeichnet, dass das Gemisch vor Ort abgebunden wird.

8. Verfahren nach Anspruch 7, dadurch gekennzeichnet, dass das Gemisch hydraulisch abgebunden wird.

9. Verfahren nach einem oder mehreren der Ansprüche 1 bis 8, dadurch gekennzeichnet, dass dem Gemisch Zement oder Zementleim zugesetzt wird.

10. Verfahren nach einem oder mehreren der Ansprüche 1 bis 9, dadurch gekennzeichnet, dass der Feststoffanteil im Gemisch aus Schwimmbergen und Flotationsbergen besteht.

11. Verfahren nach Anspruch 10, dadurch gekennzeichnet, dass die Schwimmberge und die Flotationsberge etwa zu gleichen Teilen miteinander vermischt werden.

**Claims**

1. A method of disposal or temporary storage of fine particulate solid waste material or a mixture of solid and liquid waste material, wherein the solid waste material is entrained in a liquid to form a mixture containing less than 20% by weight of entrainment liquid and the mixture is pumped by means of a piston pump through a pipeline into a natural or artificial above ground or under ground dump or chamber.

2. A method according to claim 1, in which the mixture contains from 12% to 15% by weight of entrainment liquid.

3. A method according to claim 1 or claim 2, in which the mixture contains finer grained material and coarser grained material which satisfies the condition:

$$\frac{\dot{V}_F + \dot{V}_{F1}}{M_G} > \frac{1}{\gamma'_G} - \frac{1}{\gamma_G},$$

where

$\dot{V}_F$     is the volumetric flow rate of the finer particulate material (m³/h);
$\dot{V}_{F1}$     is the volumetric flow rate of the total liquid content of the mixture (m³/h);
$\dot{M}_G$     is the mass flow rate of the coarser particulate material (t/h);
$\gamma_G$     is the bulk density of the coarser particulate material (t/m³; and
$\gamma_G$     is the density of the coarser particulate material (t/m³).

4. A method according to any one of claims 1 to 3, in which the sum of volumes of slip grain proportion of the particulate material and the liquid is greater than the sum of the pore volumes of the whole of the particulate material.

5. A method according to any one of Claims 1 to 4, in which particles of medium or fine grain size are present in the mixture in a volumetric proportion which is greater than the volumetric proportion of the theoretical pore volume of the coarser particles.

6. A method according to any one of claims 1 to 5, in which the size of the largest individual particle is from 15% to 20% of the diameter of the pipeline.

7. A method according to any one of claims 1 to 6, characterised in that the mixture is bound at the place to which it is pumped.

8. A method according to claim 7, in which the mixture is hydraulically bound.

9. A method according to claim 7 or claim 8, in which cement or other binding agent is added to the mixture.

10. A method according to any one of claims 1 to 9, in which the solid waste material in the mixture comprises light ground and flotation tailings.

11. A method according to claim 10, in which the light ground and the flotation tailings are mixed with each other in substantially equal proportions.

## Revendications

1. Procédé d'élimination ou d'entreposage de déchets fins et/ou liquides par lequel un mélange solides/liquides est transporté sous tuyauteries, par une pompe à déplacement, dans des espaces naturelles ou artificielles, au jour ou souterraines, pour y être déposé, caractérisé en ce que ce mélange, contenant moins de 20% en poids de liquide transporteur, de préférence de l'eau, est transporté dans l'espace par une pompe à pistons.

2. Procédé selon la revendication 1, caractérisé en ce que le mélange contient entre 12 et 15% en poids du liquide transporteur.

3. Procédé selon les revendications 1 ou 2, caractérisé en ce qu'un mélange de constituants fins et grossiers correspond à la condition

$$\frac{\dot{V}_F + \dot{V}_{F1}}{\dot{M}_G} > \frac{1}{\gamma'_G} - \frac{1}{\gamma'_G},$$

où:

$\dot{V}_F$    flux volumique d'éléments fins (m³/h)
$\dot{V}_{F1}$   flux volumique $\varepsilon$ du teneur en eau du mélange (m³/h)
$\dot{M}_G$    flux de masse des éléments grossiers (t/h)
$\gamma'_G$    densité en vrac des éléments grossiers (t/m³)
$\gamma_G$    poids spécifique des éléments grossiers (t/m³)

4. Procédé selon l'une ou plusieurs des revendications 1 à 3, caractérisé en ce que la somme des parties des grains très fins et de l'eau est plus grande que celle des volumes interstitiels des composantes du mélange.

5. Procédé selon l'une ou plusieurs des revendications 1 à 4, caractérisé en ce que les grains moyens et/ou fins occupent dans le mélange une partie volumique plus grande que celle du volume interstitiel théorique des grains grossiers déversés.

6. Procédé selon l'une ou plusieurs des revendications 1 à 5, caractérisé en ce que le diamètre du grain le plus gros ne dépasse pas les 15 à 25% du diamètre, de la tuyauterie.

7. Procédé selon l'une ou plusieurs des revendications 1 à 6, caractérisé en ce que la prise du mélange se fait au lieu de la mise en place.

8. Procédé selon la revendication 7, caractérisé en ce que le mélange prend hydrauliquement.

9. Procédé selon l'une ou plusieurs des revendications 1 à 8, caractérisé en ce que l'on ajoute au mélange du ciment ou de la pâte de ciment.

10. Procédé selon l'une ou plusieurs des revendications 1 à 9, caractérisé en ce que la partie des solides du mélange est composée de stériles de préparation et de déchets de flottation.

11. Procédé selon la revendication 10, caractérisé en ce que les stériles de préparation et les déchets de flottation sont mélangés à parts à peu près égales.

# Seigerriss

Fig. 1

0 026 301

# Grundriss

Fig 2

Gang 1

Wendel

Gang 2

0 026 301

Profil
A-A

NW

SE

13. Sohle

Gang 1

Gang 2

Erzrolle

Bergerolle

14. Sohle

Fig. 3

0 026 301

# FIG. 4

Vortrieb 6

Vorrichtungsberge und Pumpversatz 4

Vorrichtungsberge und Pumpversatz 3

Pumpversatz 2

1

5

5

0 026 301

## FIG. 5

Gewichtsanteile

Kies
Kies-Wasseranteil
Schluff
Schluff-Wasseranteil

Kies / Schluff

0 ... 100
100 ... 0

Schluff →
← Kies

## FIG. 6

Volumenanteile

Kies
Kies-Porenvolumen
Schluff
Kies-Wasseranteil
Schluff
Schluff

Schluff

0 ... 100
100 ... 0

Schluff →
← Kies

1 Kritische Mischung, $\Sigma$ Porenvol. = Schluff + Wasser

2 übersättigte, pumpbare Mischung
  $\Sigma$ Porenvol. < $\Sigma$ Schluff + Wasser

0 026 301